# EUROPEAN PATENT APPLICATION

(11) **EP 4 796 604 A1**
(43) Date of publication of application: **26.08.2026**
(21) Application number: 24879199.8
(22) Date of filing: 18.09.2024
(51) Int. Cl.: C09D 11/30

(54) **SUSPENSION OF CHIPS IN INKS, PAINTS OR VARNISHES, METHOD OF PRODUCTION AND USE FOR TRANSFERRING THE CHIPS TO COMPLEX SURFACES USING WRITING, PRINTING OR PAINTING DEVICES**

(30) Priority: 18.10.2023 ES 202330859
(71) Applicant: Consejo Superior de Investigaciones Científicas (CSIC), 28006 Madrid (ES)
(72) Inventor: PLAZA PLAZA, José Antonio, 08193 Cerdanyola del Vallès Barcelona (ES); AGUSIL ANTONOFF, Juan Pablo, 08193 Cerdanyola del Vallès Barcelona (ES)
(74) Representative: Isern Patentes y Marcas S.L.
(86) International application number: PCT/ES2024/070568
(87) International publication number: WO 2025/083302

(57) **Abstract**

The present invention relates to a suspension of chips that can be directly used on spatially and geometrically complex surfaces to provide these surfaces with said chips by means of writing, painting or printing devices, and to its method of production. The present invention further relates to the use of the suspension for decoration, marking, anti-forgery or anti-fraud, encryption, as sensors, as actuators, and for manufacturing electronic devices, and to the use of the suspension for determining the dimensions of the channels of a writing, painting or printing device.

## Description

The present invention relates to a suspension of chips that can be directly used on spatially and geometrically complex surfaces to provide these surfaces with said chips by means of writing, painting or printing devices, and to its method of production. The present invention further relates to the use of the suspension for decoration, marking, anti-forgery or anti-fraud, encryption, as sensors, as actuators, and for manufacturing electronic devices, and to the use of the suspension for determining the dimensions of the channels of a writing, painting or printing device.

### State of the art

There is currently a need for devices in the electronics industry in general, including micro- and nanosystems (MEMS, NEMS), that are ubiquitous. Traditional electronics, which produces chips on the order of millimetres or centimetres, cannot meet this need when it comes to placing these chips on 3D or non-planar surfaces, as they are limited by their size and rigidity. Recently, printed electronics, and in particular flexible electronics, help to partially resolve this problem. These technologies, however, are limited in functionality, control, dimensions and versatility when compared with microelectronics technologies. Furthermore, and given that their size is on the order of millimetres or centimetres, they are also limited in their ability to place these devices on complex 3D surfaces or surfaces with radii of curvature measuring less than a millimetre. To that end, these devices would ideally be manufactured using microelectronics technologies or micro- and nanosystem manufacturing technologies, which offer further development and greater versatility so that said devices can be placed on any surface.

Covering complex 3D surfaces (e.g., those made up of microfibres, such as paper, fabrics, etc. having complex topologies with small radii of curvature or sharp edges measuring less than a millimetre) with chips serving as decorative motifs, codes, sensors, electronics, test chips, among others, involves a number of requirements, such as the need to use equipment that is suitable for all types of geometries and materials, the need to adapt said equipment to the surface, the need for said equipment to be compatible with each device, the need for the equipment and the device to be compatible with the characteristics of the material, or the need to be able to place multiple devices at the same time without having to perform a chip placement operation for each surface on which the device is to be used.

Under these circumstances, there is a need to develop new techniques for placing these devices on surfaces that overcome these limitations in terms of adaptability, ease, and the speed with which the devices can be placed on virtually any object or surface.

Furthermore, in the specific field of object and surface identification, there is currently a need to be able to correctly identify different surfaces and objects, such as documents or banknotes, in a quick, automated and secure manner. To that end, there are various options, such as different types of markings that can be applied to these objects, for example banknotes, such as watermarks that unequivocally identify banknotes as genuine (see, for example, the article "Magnetically responsive photonic watermarks on banknotes" by Haibo Hu et al; J. Mater. Chem. C, 2014, 2, 3695-3702)).

Nevertheless, this type of marking of objects such as banknotes for quick and secure verification involves a number of limitations, such as the need to use marking equipment to mark each banknote, the need to adapt said equipment to the specific surface or banknote to be marked, the need for the mark to be compatible with the characteristics of the banknote material so that it can be applied to it, the need to adapt the type of marking according to the characteristics of the material or surface to be marked, or the fact that a marking operation must be performed for each individual mark to be applied to the banknote.

Under these circumstances, there is a need to develop new techniques for marking surfaces that overcome these limitations in terms of adaptability, ease, and the speed with which the markings can be applied to said objects or surfaces, such as banknotes.

### Description of the invention

The present invention relates to a suspension of chips that can be directly used on spatially and geometrically complex surfaces by means of writing, painting or printing devices for the purpose of writing, drawing, painting, or printing said chips and thus providing these surfaces with said microchips as electronics or microelectronics devices, or as sensors and actuators. Another purpose of writing, drawing, painting or printing chips on surfaces involves marking surfaces of textiles, paper, cardboard, ceramics, metals, banknotes, etc., to include decorative motifs, or to encode them, identify them, calibrate them, etc.

By way of non-limiting example, the suspension of the present invention could be used as:
- Decorative suspension: where the chips have decorative shapes or motifs at a micrometre scale, for example, people's names, small represented structures (emoticons, symbols, letters, numbers, sketches, etc.). Being of interest to the paper industry for: pens, oil paintings, acrylic paintings, watercolour paintings, printers, etc.
- Suspensions for markings: where the chips are shaped like logos (logos for companies, cities, etc.), which are of interest to the merchandising industry, for promotional purposes, for corporate identities, etc.)
- Anti-fraud or anti-forgery suspensions: for writing, painting or printing and thus transferring the chips to surfaces in the form of geometric codes, or electromagnetic codes such as tags (coils), or in the form of fluorescent optical codes, or in the form of quantum dots, which are of interest to industries involved in protecting documents, personal signatures, banknotes, works of art, paintings, collectors' items, valuable personal items, brand authentication, medicinal products, clothing, etc.
- Suspended electronics: where the chips are provided with electronics or have mechanical, electromagnetic, thermal, (bio)chemical properties useful to the electronics industry in general.

Furthermore, the present invention relates to the use of the suspension for determining the dimensions of the channels of a writing, painting or printing device.

Therefore, a first aspect of the invention relates to a suspension characterised in that it comprises:
∘ **a solid phase comprising** chips selected from semiconductor materials, insulating or semiconductor oxides or nitrides, metals, magnetic materials, a polymer, a photoresist, or any of the combinations thereof; wherein the semiconductor materials are selected from silicon (Si), amorphous silicon, monocrystalline silicon, polysilicon, germanium (Ge), gallium arsenide (GaAs); wherein the insulating or semiconductor oxides or nitrides are selected from silicon oxide, aluminium oxide, aluminium nitride or silicon nitride; wherein the metals are selected from aluminium, gold, platinum or copper; wherein the magnetic materials are selected from Co, Ni, or NiCo; wherein the polymer is selected from polydimethylsiloxane (PDMS), polymethylphenylsiloxane and polydiphenylsiloxane; and wherein the photoresist is selected from SU-8, SU-8 2000, SU-8 3000, SU-8 GLM2060, SU-8 GLM3060, SU-8 GMC10xx, SU-8 GMJB10XX, SU-8 GM10XX; or any of the combinations thereof;
   wherein the chips range in size from 1 to 250 µm along their X-axis (width), 1 to 250 µm along their Y-axis (length), and 10 nm to 50 µm along their Z-axis (height or thickness), said size being determined by optical, confocal, atomic or scanning electron microscopy measurements, or by focused ion beam (FIB) measurements, profilometers or ellipsometers, and
   optionally at least one planar surface of said chips is functionalised by at least one compound selected from molecules, biomolecules, nanoparticles, or any of the combinations thereof;
∘ a continuous liquid or semi-liquid phase as a medium for suspending the chips, said medium selected from inks, paints or varnishes;
and wherein the percentage by weight of the solid phase is between 0.000001% and 60% of the total weight of the suspension.

In the present invention, the term "suspension" refers to a heterogeneous mixture consisting of an insoluble solid (solid phase) comprising the chips described above and dispersed in a liquid or semi-liquid medium (continuous liquid or semi-liquid phase) selected from inks, paints or varnishes.

The chips of the invention are micrometre-sized in all three spatial directions X, Y and Z within the range of 1 to 250 µm along their X-axis, 1 to 250 µm along their Y-axis, and 10 nm to 50 µm along their Z-axis (thickness). This size can be determined using any technique for measuring chip size, for example, optical microscopy as a non-limiting example. Larger sizes along the X- and Y-axes will be difficult to handle using the open or closed channels of instruments for writing (ballpoint pens, fountain pens), printing (inkjet printers) or painting (brushes). Chips with smaller dimensions along the X- and Y-axes can be manufactured, but with current technology, they are so small that they may have limited functionality. The range of thicknesses between 10 nm and 50 µm along the Z-axis is the range of thicknesses that can typically produce, deposit and obtain layers in the microelectronics industry. In particular, the chips of the invention relate to chips that perform functions typical of the field of electronics in general.

In a particular embodiment, the chips are functionalised on at least one of their top or bottom planar surfaces by at least one compound selected from molecules, biomolecules, nanoparticles, or any combination of the foregoing, the functionality of which is to be transferred to the chip itself. This functionalisation can be achieved by chemisorption, physisorption and/or covalent bonds, preferably by covalent bonds. It has been observed that the specific functionalisation of the chips with these compounds allows the functionalisation to be concentrated in specific areas of the chips, which makes it possible to define the shape and size of the area to be functionalised, or even functionalise various areas with different types of functionalising compounds, thereby enabling different properties to be combined.

The term "molecules" refers to a compound selected from luminescent compounds, anti-caking compounds, anti-adherent compounds and cross-linking compounds, which contain one or more chemical terminations that enable the compound to form covalent bonds with the surface of the chips. The luminescent compounds comprise fluorescent substances such as fluorophores derived from the families of xanthene, cyanine, squaraine, naphthalene, coumarin, oxadiazole, anthracene, pyrene, oxazine, acridine, arylmethine, tetrapyrrole or dipyrromethane; and phosphorescent substances such as zinc sulphide, strontium aluminate, doped rare earth elements such as europium or terbium. The anti-caking compounds provide advantageous properties that prevent the formation of clumps due to the surface polarity of the chips in suspension. The anti-adherent compounds prevent the physical bonding of the chips in suspension, for example, silicon oxide, calcium silicate, magnesium carbonate, sodium ferrocyanide, potassium ferrocyanide, cellulose or polyethylene glycol (PEG). The cross-linking compounds form a molecular network on the surface of the chips. This network may have reactive molecular terminations to cross-link additional compounds to the surface of the chips, for example, amine-to-amine cross-linkers, sulfhydryl-to-carbohydrate cross-linkers, sulfhydryl-to-sulfhydryl cross-linkers, amine-to-sulfhydryl cross-linkers or carboxyl-to-amine cross-linkers. The molecules can provide chips with chemical properties, for example, as chemical sensors or actuators.

The term "biomolecules" refers to compounds selected from proteins, nucleotide chains or antibodies, which contain one or more chemical terminations that enable the compound to form covalent bonds with the surface of the chips. The proteins provide the chips with biological activity and processes. The nucleotide chains incorporate DNA and RNA into the chips, generating biologically encoded surfaces capable of recognising secondary nucleotide chains. The antibodies form binding sites between the chips and antigens for their detection and identification. Just like molecules, biomolecules can provide the chips with anti-adherent, anti-caking or luminescent properties, or as biochemical sensors or actuators.

The term "nanoparticles" refers to particles ranging in size from 1 to 100 nm, which contain reactive groups on their surface and can be fixed on the chips by covalent bonds. For example, quantum dots can be selected. Quantum dots (QDs) are semiconductor nanoparticles measuring a few nanometres in size and consisting of between 100 and 10,000 atoms. They have unique optoelectronic properties that allow energy levels to be tuned to their wavelength or colour, and they can be deposited onto the chips to provide them with said properties. The inventors of the present invention have observed that incorporating said quantum dots into the chips of the invention is useful when using them as identification or coding elements for surfaces or objects to which said chips are applied.

In a preferred embodiment of the suspension, the chips are made of photoresist, more preferably SU-8, and the shape and size of the chip are obtained by photolithography, having been predefined by a photomask designed ad hoc. The size and shape of the chip are predetermined by the photomask, which has already been designed with the required shape and dimensions of the chip, so that photolithography is used to obtain the chips of said shape and size. This makes it possible to customise the shape and size of the chips, as well as the physical characteristics derived from their shape and size. SU-8 photoresist is a commonly used epoxy-based negative photoresist. Negative refers to a photoresist whereby the parts exposed to UV light are polymerised, while the remainder of the photoresist remains soluble and can be washed away during development. SU-8 takes its name from the presence of eight epoxy groups in its structure. Some variants of SU-8 that may be used as a photoresist according to the invention and in a non-limiting manner include SU-8 2000 (which resists the use of cyclopentanone as a primary solvent and has improved adhesion compared to SU-8), SU-8 3000 (which also uses cyclopentanone as a primary solvent and can be spun into thicker films than SU-8), SU-8 GLM2060 (a low-stress photoresist consisting of epoxy GBL and silica formulation CTE 14), SU-8 GLM3060 (SU-8 with silver nanoparticles), SU-8 GMC10xx (SU-8 series in red, blue, green, black, etc.), SU-8 GMJB10XX (SU-8 series of low-viscosity epoxy for inkjet applications), SU8 GM10XX (series of classic epoxy), or the combinations thereof.

In another preferred embodiment of the suspension, the chips are made of silicon and the shape and size of the chips have been determined by means of an etching process that structures said chips, the shape and size having been predefined by a photomask designed ad hoc.

The suspension of the present invention comprises a solid phase comprising chips selected from semiconductor materials, insulating or semiconductor oxides or nitrides, metals, magnetic materials, a polymer, a photoresist, or any of the combinations thereof; wherein the semiconductor materials are selected from silicon (Si), amorphous silicon, monocrystalline silicon, polysilicon, germanium (Ge), gallium arsenide (GaAs); wherein the insulating or semiconductor oxides or nitrides are selected from silicon oxide, aluminium oxide, aluminium nitride or silicon nitride; wherein the metals are selected from aluminium, gold, platinum or copper; wherein the magnetic materials are selected from Co, Ni, or NiCo; wherein the polymer is selected from polydimethylsiloxane (PDMS), polymethylphenylsiloxane and polydiphenylsiloxane; and wherein the photoresist is selected from SU-8, SU-8 2000, SU-8 3000, SU-8 GLM2060, SU-8 GLM3060, SU-8 GMC10xx, SU-8 GMJB10XX, SU-8 GM10XX; or any of the combinations thereof. In another embodiment of the suspension, the chips consist of a combination of the materials mentioned above and, preferably, said chips are manufactured using microelectronics techniques or micro- and nanosystem manufacturing techniques, using mainly photolithographic processes to control their dimensions, for the purpose of manufacturing electronic or magnetic chips, or mechanical, magnetic, thermal, (bio)chemical sensors or actuators, etc.

As for the shape of the chips, it be any shape depending on the electrical, physical, magnetic properties, etc., and in any shape desired, for example, as a cantilever, bridge, lever, to form tiles, a barcode, stars, or any of the combinations thereof, among others, as well as any flat geometry. This also includes any shape corresponding to that of known electronic devices.

In a preferred embodiment of the chips of the present invention, the shape of the chips is selected from cantilever, bridge, lever, for example and without limitation, to generate a barcode, star, any drawing or diagram, number, sequence of numbers, letters or sequence of letters, words, etc.; and/or any flat geometric shape, for example and without being limited to, circles, disks, crowns, triangles, squares, rectangles, pentagons, hexagons, heptagons, dodecagons, parallelepipeds, irregular flat shapes, etc.; and any combination of the foregoing.

Preferably, the chip has a cantilevered shape or has a plurality of cantilevers. More preferably, the chips have a lateral dimension of between 1 and 250 µm (X, Y) and between 10 nm and 50 µm in thickness (Z).

The chips with a cantilevered shape or having a plurality of cantilevers are useful as breakage sensors when subjected to mechanical stress. This shape allows these chips to be used to test their resistance to mechanical stress, for example, the stresses that the chips can withstand and the extreme stresses that can cause the chips to break.

Moreover, the chips of the suspension of the invention, which have a cantilevered shape or a plurality of cantilevers and lateral dimensions preferably on the order of 1 to 5 µm in width, 10 to 100 µm in length and nanometre-sized thicknesses of between 10 nm and 100 nm, are particularly interesting as their thickness provides these chips with extraordinary flexibility, making it easier for the chip itself to adhere to curved surfaces or microfibres.

In another even more preferred embodiment, the chip is disc-shaped and the size of the disc-shaped chips ranges from 3 µm in diameter × 0.5 µm in thickness up to 248 µm in diameter × 5 µm in thickness.

In the suspension of the present invention, the liquid or semi-liquid phase used as a suspension medium is preferably an ink. The term "ink" refers to a coloured or transparent, fluid or viscous substance, which is used for writing, painting, drawing or printing, and includes, in a generic, non-limiting manner, ink for ballpoint pens, markers, fountain pens, polymer stamps, printers.

Another aspect of the invention relates to a method for obtaining the suspension of photoresist chips described above (hereinafter referred to as first method of the invention), characterised in that it comprises the following sequential steps:
a) providing a substrate, preferably a flat substrate, which can be made of any material and have any shape; the substrate will preferably be a silicon or glass, polymer or metal substrate;
b) coating the substrate of step (a), totally or partially, with a layer of sacrificial material; the sacrificial material is preferably selected from water-soluble polymers such as PVOH (poly(vinyl alcohol)), PEG (polyethylene glycol), PAA (poly(acrylic) acid)), PAM (polyacrylamide), HEC (hydroxyethyl cellulose), PVP (polyvinylpyrrolidone), PEO (polyethylene oxide) or sodium alginate;
c) depositing, onto the sacrificial layer of step (b), the structural layer of a photoresist selected from SU-8, SU-8 2000, SU-8 3000, SU-8 GLM2060, SU-8 GLM3060, SU-8 GMC10xx, SU-8 GMJB10XX, SU-8 GM10XX, or any of the combinations thereof;
d) defining the size and shape of the structural layer using photolithography; the size and shape of the structural layer is preferably determined by using a mask designed ad hoc, to design the shape and size of the chip;
e) optionally applying to the layer obtained in step (d) a top layer comprising at least one compound, preferably selected from molecules, biomolecules, nanoparticles, or any of the combinations thereof; more preferably, the compound is selected from fluorophores, anti-caking compounds, anti-adherent compounds, biomolecules, quantum dots, or any of the combinations thereof;
f) releasing the chips obtained in step (d) or (e) from the substrate by dissolving them in water or an aqueous solution, when the sacrificial layer is water-soluble, for a period of time between 5 and 60 minutes, at a temperature of between 5 and 80°C. Optionally, if the chips adhere to the substrate, they can be stirred or subjected to ultrasonic waves to release the chips; and
g) dispersing the chips obtained in step (f) in a liquid or semi-liquid phase selected from inks, paints or varnishes, wherein the percentage by weight of the chips is between 0.000001% and 60% of the total weight of the suspension.

The purpose of step (b) of coating the substrate with a sacrificial layer is to be able to build the chip(s) of interest on top of said layer, so that when the sacrificial layer is finally dissolved, the chip built on top of said layer is released from the substrate of step (a).

In step (c), the photoresist, the main material from which the chip is made, is deposited, which is why the resulting layer is referred to as the "structural layer".

After step (f), chips having a photoresist structural layer are obtained which may be coated on their bottom and/or top portions, or on both their top and bottom portions, with a chemical functionalisation compound previously described in the present invention, preferably selected from fluorophores, anti-caking compounds, anti-adherent compounds, biomolecules, quantum dots, or any of the combinations thereof.

Optionally, after step (b) and before step (c), a layer is applied to at least one part of the surface of the layer of sacrificial material of at least one compound, wherein said compound may be selected from molecules, biomolecules, nanoparticles, or any of the combinations thereof; more preferably, it may be selected from fluorophores, anti-caking compounds, anti-adherent compounds, biomolecules, quantum dots, or any of the combinations thereof.

Therefore, the chips may be functionalised as described in step (e) and/or between steps (b) and (c), as described above.

Another aspect of the invention relates to a method for obtaining the suspension described above (hereinafter referred to as the second method of the invention), characterised in that the chips are made of semiconductor materials, or insulating or semiconductor oxides or nitrides, or metals, or magnetic materials, or polymers, or combinations thereof, and comprises the following sequential steps:
i. providing a substrate, preferably a flat substrate, made of silicon;
ii. thermally oxidising the surface of the silicon substrate of step (i),
   or depositing silicon oxide onto the substrate of step (i) until a sacrificial layer of silicon oxide with a thickness of 0.1 to 1 µm is obtained;
   or depositing a sacrificial layer of aluminium onto the substrate of step (i) until a sacrificial layer of Al with a thickness of 0.1 to 1 µm is obtained;
iii. depositing, onto the sacrificial layer obtained in step (ii), a structural layer of amorphous silicon, monocrystalline silicon, polysilicon, germanium, gallium arsenide, silicon oxide, silicon nitride, aluminium, gold, platinum, copper, Co, Ni, NiCo, PDMS, polymethylphenylsiloxane and polydiphenylsiloxane or combinations thereof, preferably a layer with a thickness of 25 nm to 50 µm;
iv. defining the size and shape of the structural layer by partially removing the structural layer by means of an etching process; the size and shape of the structural layer is preferably determined by using a mask designed ad hoc, to design the shape and size of the chips, so that the size and shape of the chip can be pre-designed as desired or as required;
v. optionally applying a top chemical functionalisation layer to the structural layer obtained in (iii) using at least one chemical compound, preferably selected from compounds of molecules, biomolecules, or nanoparticles, or the combinations thereof; and optionally applying one or more structural layers of silicon, insulating or semiconductor oxides or nitrides, metal, magnetic materials, photoresists, or any of the combinations thereof; wherein silicon is selected from amorphous silicon, monocrystalline silicon or polysilicon; wherein the insulating or semiconductor oxides or nitrides are selected from silicon oxide, aluminium oxide, aluminium nitride or silicon nitride; wherein the metals are selected from aluminium, gold, platinum or copper; wherein the magnetic materials are selected from Co, Ni, or NiCo, and wherein the photoresist is selected from SU-8, SU-8 2000, SU-8 3000, SU-8 GLM2060, SU-8 GLM3060, SU-8 GMC10xx, SU-8 GMJB10XX, SU-8 GM10XX; or any of the combinations thereof; and
vi. releasing the chips obtained in step (iv) or (v) from the substrate, by etching with acid vapours, preferably hydrofluoric acid vapours, the sacrificial layer of silicon oxide incorporated or formed in step (ii), which served as an interface between the substrate and the chip to be manufactured, until the sacrificial layer was completely removed; or by etching with a 50% KOH solution the sacrificial layer of Al incorporated in step (ii), which served as an interface between the substrate and the chip to be manufactured, until the sacrificial layer was completely removed; and
vii. dispersing the chips obtained in step (vi) in a liquid or semi-liquid phase selected from inks, paints or varnishes, wherein the percentage by weight of the solid phase is between 0.000001% and 60% of the total weight of the suspension.

The choice of sacrificial layer, silicon oxide, aluminium, or combinations thereof will depend on the material of the structural layer, bearing in mind that when releasing the chips from the substrate by dissolving, preferably using HF vapours when the sacrificial layer is made of silicon oxide, or KOH solutions when the sacrificial layer is made of aluminium, for a period of time between 5 and 60 minutes, at a temperature of between 5°C and 80°C, the sacrificial layer will be the one that dissolves without affecting the integrity of the structural layer. For example, if the structural layer is made of polysilicon or amorphous silicon, the sacrificial layer may preferably be made of silicon oxide. For example, if the structural layer is made of silicon oxide, the sacrificial layer may preferably be made of aluminium.

In an even more preferred embodiment of the method of the invention, the chips are made of silicon.

In a preferred embodiment of the method of the invention, the shape and size of the chip has been determined by means of an etching process that structures the chips. The size and shape are predefined by a photomask designed ad hoc, thereby making it possible to customise the size and shape of the chips as desired or as required.

In the specific case where the structural layer is made of silicon oxide, said layer can in turn be coated with another structural material from those mentioned above that are not dissolved by etching with HF acid vapours. Therefore, the structural layer is successfully protected after step (vi).

In a preferred embodiment of the method for obtaining a suspension of the chips, after step (ii) and before step (iii), a layer of a compound is applied partially or completely to the surface of the sacrificial layer, wherein said compound may be selected from molecules, biomolecules, nanoparticles, or any of the combinations thereof; preferably, the compound is selected from fluorophores, anti-caking compounds, anti-adherent compounds, biomolecules, quantum dots, or any of the combinations thereof; more preferably, the functionalised surface is the one which, once deposited, lies on the layer opposite the substrate and is configured to be in contact with the material of the structural layer.

Both the first and the second method of the invention, as described above, are manufacturing processes that define the chips with very precisely controlled lateral dimensions, with an accuracy on the order of tens of nanometres, and thicknesses that can be accurate to within a few nanometres.

In the methods for obtaining the suspensions described above, the chemical functionalisation of the chips (for example, (steps (v) or (e)) is preferably applied as a layer of uniform and continuous thickness above and/or below the chip, although the invention also provides for applying said functionalisation layer to any surface of the chip, as well as a uniform, non-uniform, continuous, or discontinuous layer.

Chemical functionalisation may be performed using any state-of-the-art technique that allows surfaces to be chemically functionalised, such as soft lithography or solution-based chemical printing systems.

In the present invention, the term "soft lithography printing" refers to any technique for printing molecules, biomolecules or nanoparticles by means of contact with an elastomeric stamp that has been previously coated with the compound selected from said molecules, biomolecules or nanoparticles on the surface of the chips. The present invention involves printing these compounds on the surface of the chips, using microcontact printing and polymer pen lithography techniques. In the case of microcontact printing, a flat polydimethylsiloxane (PDMS) elastomeric stamp is used, and in the case of polymer pen lithography, a PDMS elastomeric stamp structured with pyramid-shaped elements is used, with the tips of the pyramids coming into contact with the surface to be printed. In both cases, the stamp is inked with the printing ink. After drying the excess ink solution on the stamp, the stamp is placed in contact with the chips on the portion of the wafer to be functionalised. Light pressure is applied to ensure that the entire stamp is in contact with the chips and it is left to react for 2 minutes.

The term "solution-based chemistry" refers to the process of functionalising the surface of chips by exposing them to a reagent solution, whereby the reagent becomes covalently bonded to the surface of the chip.

Another aspect of the invention relates to the use of the suspension of the present invention, to transfer the chips contained in the suspension to spatially and geometrically complex surfaces.

Another aspect of the present invention relates to a method for transferring the chips contained in the suspension of the present invention to a surface, characterised in that it comprises a step of depositing the suspension of the invention onto the surface by means of writing, painting or printing means, wherein the writing, painting or printing means comprise channels for distributing the suspension onto the surface, and wherein the chips of the suspension are smaller than the channels of the writing, painting or printing device.

By applying the suspension to a surface according to the method described, the chips contained therein do not break or become stuck in the channels of the device, further ensuring that the chips are transferred while maintaining their structural integrity.

Therefore, the method for transferring the chips contained in the suspension to a surface of the present invention can be used in applications including decoration, marking, anti-forgery or anti-fraud, encryption and manufacture of electronic devices, as mentioned above.

Another aspect of the invention relates to the use of the suspension of the present invention for determining, as a characterisation test, the dimensions of the channels of a writing, painting or printing device. Preferably, the suspension comprises disc-shaped chips.

Another aspect of the present invention relates to a method for determining the dimensions of the channels of a writing, painting or printing device, characterised in that it comprises a step of passing the suspension according to any of claims 1 to 7 through a channel of a writing, painting or printing device, wherein the chips contained in the suspension are larger than the channel of the device and wherein said chips are unable to pass through the channel and they break.

For example, the method described makes it possible to determine the diameter of the closed duct (channel) of devices such as an inkjet printer, ballpoint pen or marker.

In the present invention, the term "channel" also refers to the open spaces between the bristles of a brush or in a fountain pen. Therefore, the method described also makes it possible to determine this space through which the suspension containing the chips flows.

The final aspect of the invention relates to a device capable of using or dispensing a suspension on spatially and geometrically complex surfaces via an outlet channel, wherein said device comprises the suspension of the invention and wherein the outlet channel has a diameter greater than the largest dimension of the chips of the suspension. Preferably, the device is selected from a writing, painting or printing device, more preferably from an inkjet printer, a ballpoint pen, a fountain pen, a polymer stamp or a brush.

### Brief description of the figures

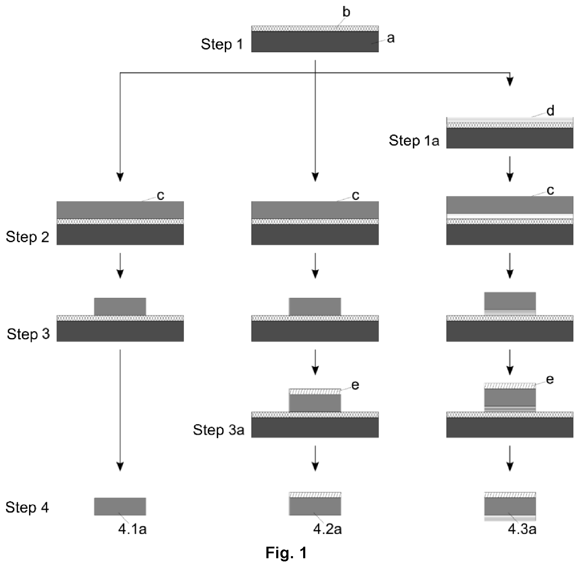

**Fig. 1** shows a general diagram of the method for manufacturing the suspension of the chips according to the present invention.

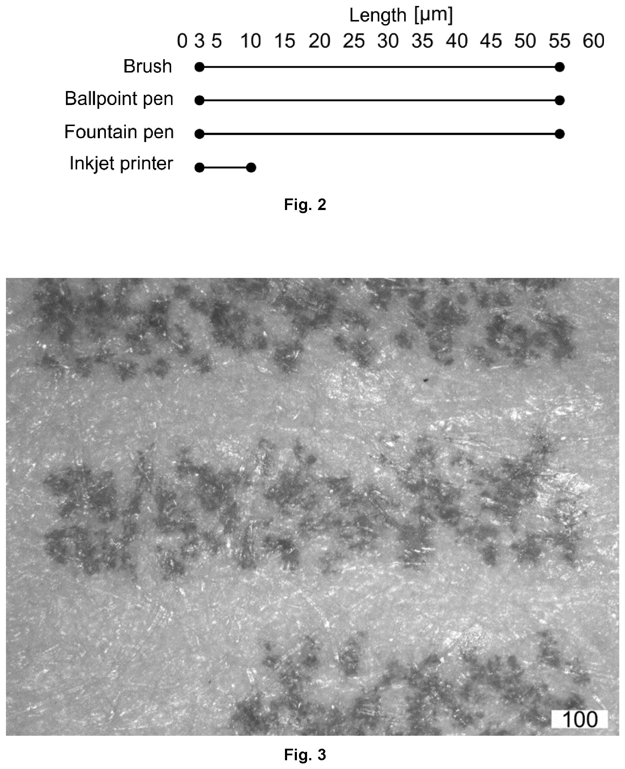

**Fig. 2** shows a comparative table of the longest lengths of chips that were tested and correctly written, painted or printed onto any substrate.
**Fig. 3** shows a micrometre-sized optical microscopy image of a print test from testing of channels of an EPSON ET-2710 printer with silicon chips resuspended in inkjet printer ink (EPSON 104). The blank spaces represent the blocked channels of the inkjet printing that have prevented the printing ink from passing through.

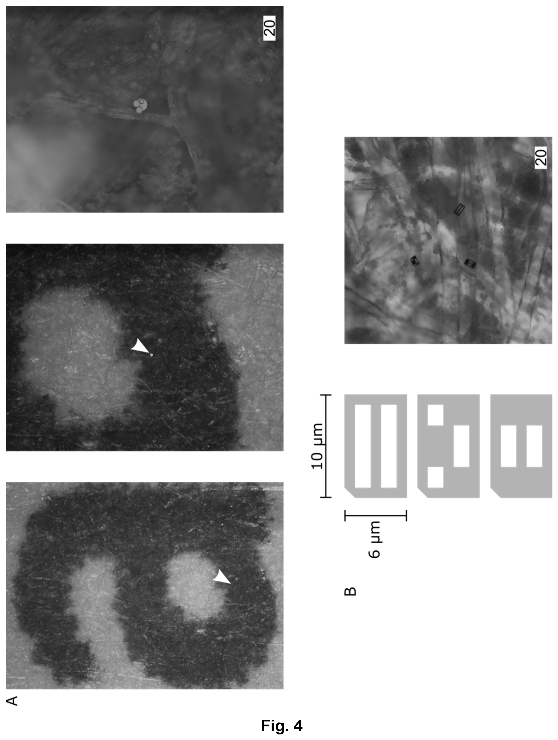

**Fig. 4** shows a micrometre-sized optical microscopy image (4A) of a print test from an EPSON ET-2710 printer with silicon chips resuspended in inkjet printer ink (EPSON 104), wherein circular polysilicon chips with diameters of 3, 5 and 10 µm and a thickness of 0.5 µm have been printed onto text. It also shows an optical microscopy image (4B) of 6 µm × 10 µm polysilicon chips with a thickness of 1 µm, in the form of barcodes, suspended in printer ink and printed using the same printer.

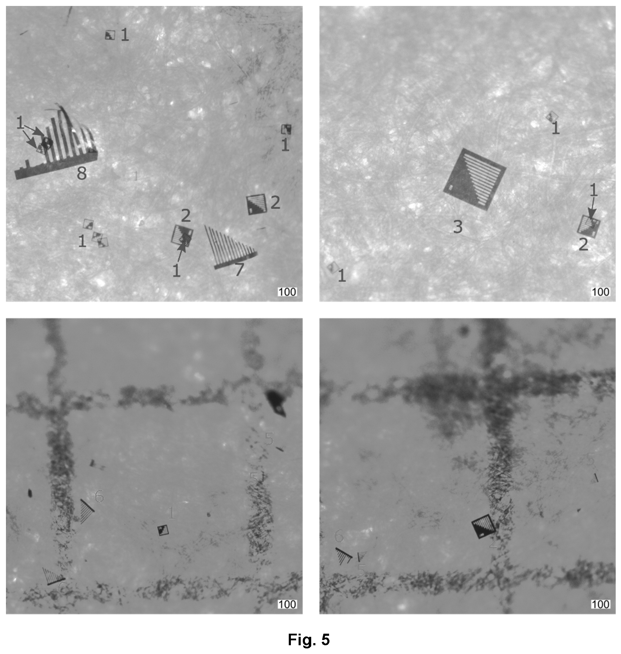

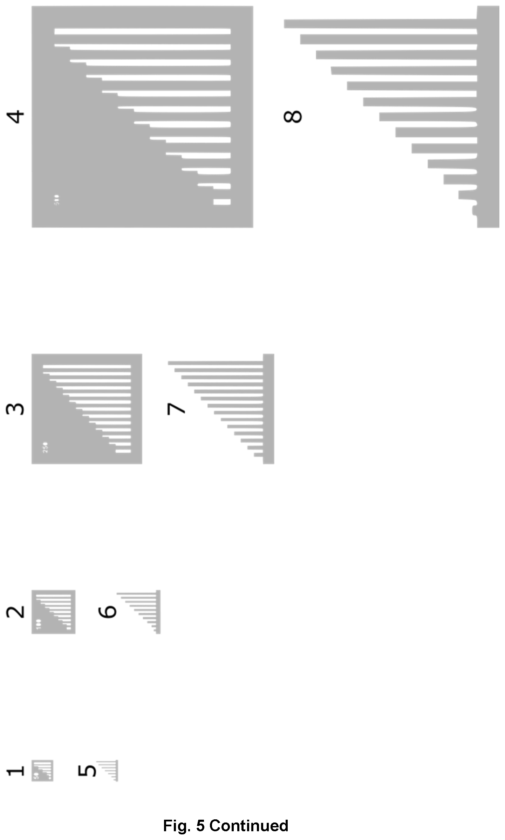

**Fig. 5** shows chips with a cantilevered shape, in the form of breakage testing structures, with dimensions of 50×50 µm², 100×100 µm², 250×250 µm² and 500×500 µm², resuspended in red and blue water-based paint and painted on graph paper using a brush. The microscopy images show the final location of several chips. The numbers show the type of chips present in the image and their structural integrity. The scales are in µm.

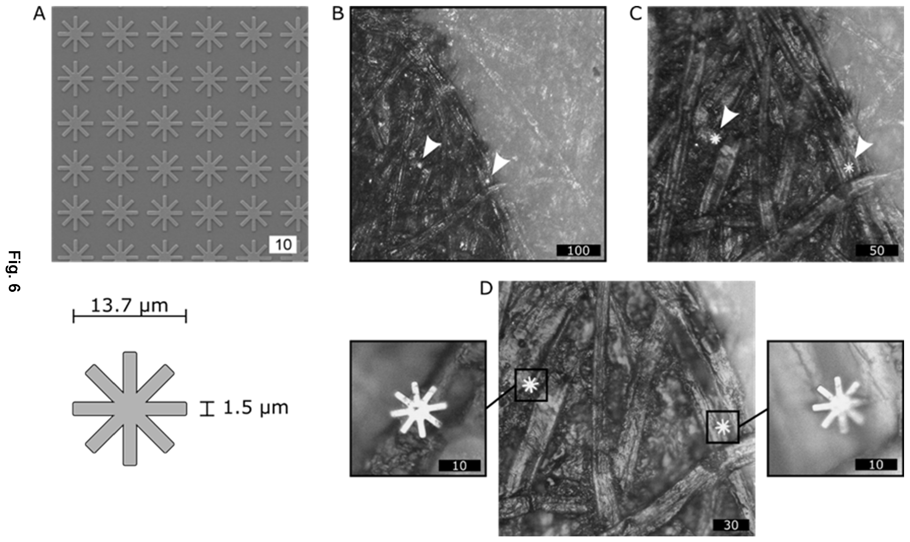

**Fig. 6** shows a scanning electron microscopy image (6A) of 8-pointed star-shaped polysilicon chips, each 13.7 µm long and wide, fixed onto a wafer. It also shows a diagram of the star-shaped polysilicon chips suspended in the ballpoint pen ink used to write on standard paper. Figures 6B) to D) show optical microscopy images at different magnifications, showing the final location of two chips on the written text. The white arrows point to the chips in the images. The scales are in µm.

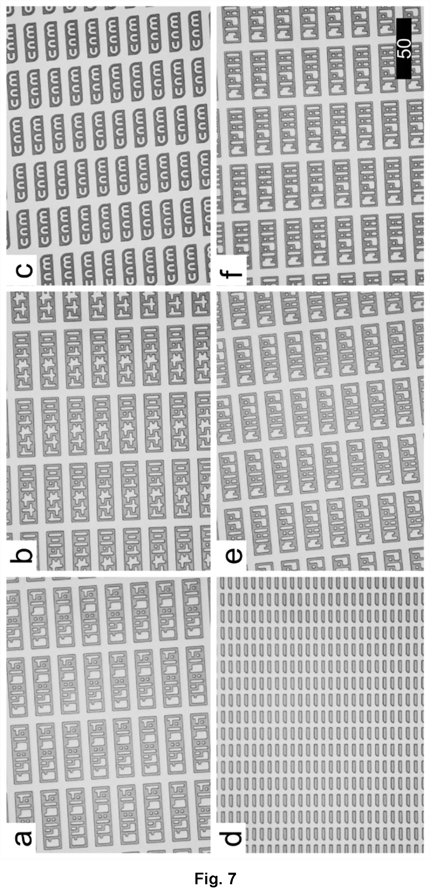

**Fig. 7** shows optical microscopy images of photoresist chips fixed on the substrate and the soluble sacrificial layer, before the soluble sacrificial layer dissolves and the photoresist chips are released. Figure 7a shows chips with the numeric code 14876, Figure 7b shows chips with the numeric code 25390, Figure 7c shows chips with the CNM logo. Figure 7d shows chips with a read-start mark in one corner, Figure 7e shows chips with the alphabetical code JAPP, and Figure 7f shows chips with the alphabetical code JPAA. The scale is in µm.

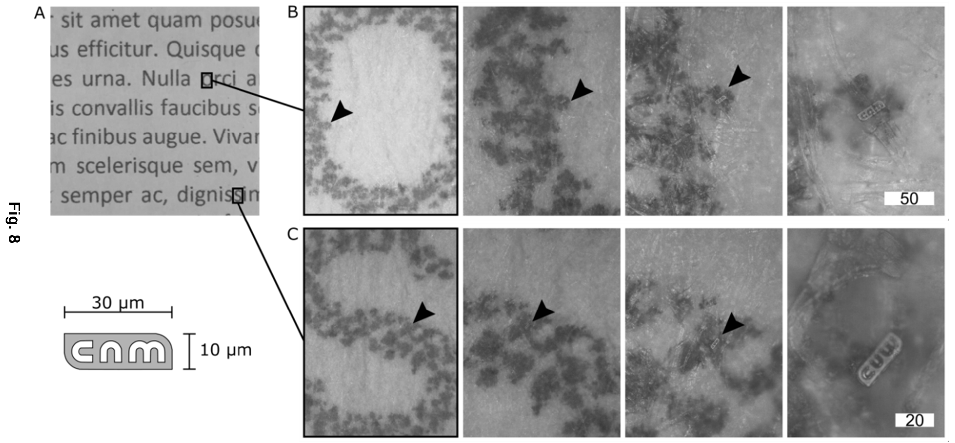

**Fig. 8** shows A) SU-8 chips in the form of the CNM logo, 30 µm long and 10 µm wide, suspended in the ink used to print on standard paper. B) to C) microscopy images at different magnifications, showing the final location of two chips on the printed text. The black arrows point to the chips in the photos. The scales are in µm.

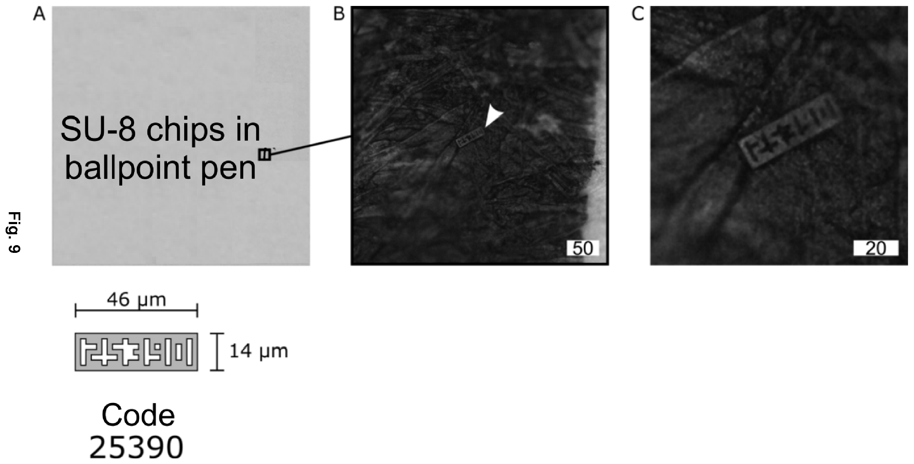

**Fig. 9** shows A) SU-8 chips in the form of the code 25390, 46 µm long and 14 µm wide, suspended in the ballpoint pen ink used to write on standard paper. B) to C) microscopy images at different magnifications, showing the final location of a chip on the written text. The white arrow points to the chip in the image. The scales are in µm.

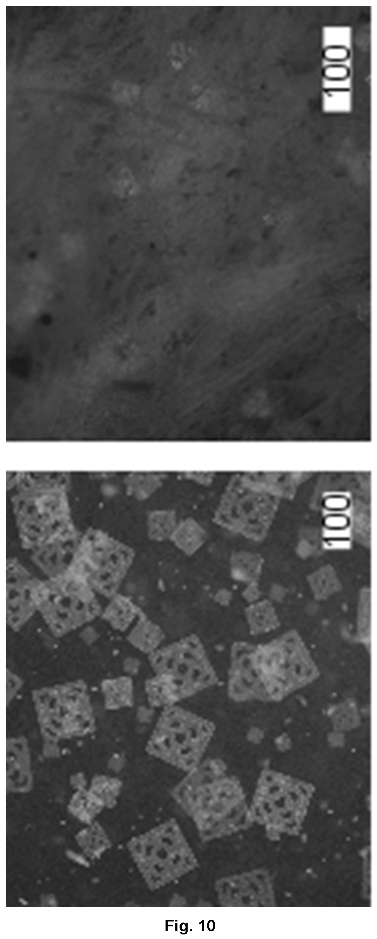

**Fig. 10** shows SU-8 chips in the form of a Barcelona tile and a Panda tile, functionalised with quantum dots emitting at 585 nm and 655 nm, respectively. Watercolour paint and a brush were used to paint on standard paper. The scales are in µm.

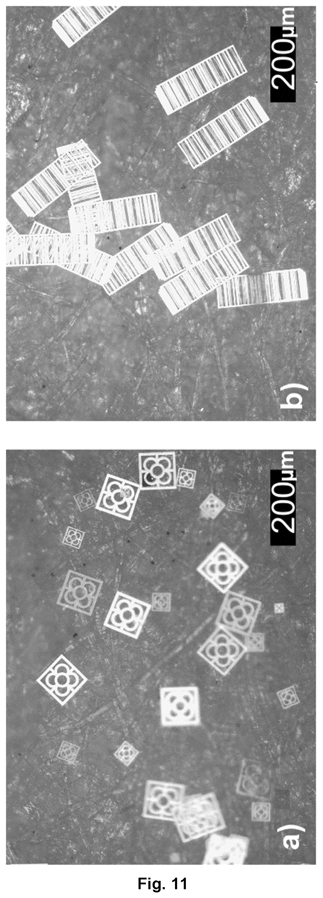

**Fig. 11** shows an optical microscopy image of the chips suspended in an ink and subsequently deposited onto paper using a fountain pen. On the left (Figure 11a), chips in the form of the Barcelona tile in various sizes are shown, applied as a suspension on white paper using yellow printer ink as the deposit liquid medium. On the right (Figure 11b), chips in the form of barcodes are shown, applied as a suspension on paper, using water as the deposit liquid. The scales are in µm.

### EXAMPLES

Next, an exemplary embodiment of the invention is provided which defines the chip production process. A description/characterisation of the chips manufactured using this method is provided and describes how a suspension is prepared with said chips.

### Example 1

### Manufacturing polysilicon chips.

To produce polysilicon chips, the starting material was a silicon wafer substrate 100 mm in diameter and 500 µm thick.

Step 1: Next, the surface of a silicon substrate is thermally oxidised until a 1 µm-thick sacrificial layer of silicon oxide is obtained. Figure 1 (step 1) shows the application of the "sacrificial layer" (b) onto a substrate (a).

Step 2: Next, a polysilicon "structural layer" with thicknesses ranging from 25 nm to 2.25 µm was applied on top of the surface of the sacrificial layer, as can be seen in Figure 1, step 2, polysilicon deposition (c) using the Chemical Vapour Deposition (CVD) technique. The deposit parameters are: Temperature = 1000°C, Pressure = 4 atm, Injection rate = 3.5 m/s, Mole fraction of H₂ = 0.91

Step 3: Next, using photolithography, the shape and dimensions of the resulting chip were determined. To do this, the device is exposed to UV light through the ad hoc photomask that has been mounted on an aligner.

Figure 6A shows scanning electron microscopy images of polysilicon chips fixed on the substrate, before the sacrificial layer dissolves and the photoresist chips are released.

Lastly, step 4 in Figure 1 represents the step of removing the sacrificial layer by dissolving the soluble sacrificial layer using hydrofluoric acid vapours. To perform this step, the wafer is divided into portions measuring approximately 1×1 cm² and exposed to an atmosphere saturated with the acid. It is left to be etched for 20 minutes or until the thermal oxide has been completely removed. The resulting chips are therefore separated from the initial substrate (4.1a) and are collected and resuspended in ethanol.

### Example 2

### Ink + printed silicon test chips for characterising the microchannels of the inkjet printer

Following example 1 for obtaining circular silicon chips with a diameter Φ of 15-25 µm and a thickness of 0.5 µm, said chips were resuspended in inkjet printer ink (EPSON 104). The ink suspension containing the silicon chips was loaded into the printer (EPSON ET-2710) and a document was printed on printing paper. When printing, no chips are visible on the print (figure 3), meaning it can be argued that the chips get stuck in the channels because of their size. Similarly, it can be seen that the printed pattern has blank spaces, indicating blockage of the printing channels, as the devices had not yet exited through the tubes at the time of printing. Moreover, a mixture of various circular silicon chips was used, comprising 33.33% of the total chips with a diameter of 3 µm, 33.33% with a diameter of 5 µm and 33.33% with a diameter of 10 µm, all with a thickness of 0.5 µm, which were resuspended in inkjet printer ink (EPSON 104). The ink suspension containing the silicon chips was loaded into the printer (EPSON ET-2710) and a document was printed on printing paper. When printing, chips measuring 3, 5 and 10 µm in diameter are visible on the print (figure 4A), demonstrating that the dimensions of these chips are suitable for passing through the printing channels of the printer. The scales in the figures are in µm.

### Example 3

### Ink + silicon chips in the form of a barcode printed using an inkjet printer

Following example 1 for obtaining silicon chips, the "structural layer" is in the form of a barcode and said chips were resuspended in inkjet printer ink (EPSON 104). The ink suspension containing the silicon chips was loaded into the printer (EPSON ET-2710) and a document was printed on printing paper. When printing, chips are visible on the print (figure 4B). It can therefore be argued that the printed sheet has been encoded with the chips in the form of a barcode. The scale in Figure 4B is in µm.

### Example 4

### Ink + polysilicon chips painted with a brush for breakage testing

Following example 1 for obtaining the polysilicon chips, said chips were manufactured and resuspended in water-based paint (watercolours) and an 8 mm brush (Staedtler) was used on standard paper. Silicon chips are obtained in the form of force testing structures with dimensions of 50×50 µm², 100×100 µm², 250×250 µm² and 500×500 µm², resuspended in red and blue water-based paint and painted on graph paper. Figure 5 shows a microscopy image in which several chips can be seen. The numbers show the type of chips present in the image and their structural integrity. The scales are in µm.

### Example 5

### Ink + silicon chips written with a ballpoint pen

The silicon chips were manufactured in accordance with the manufacturing protocol set out in Example 1 and resuspended in the ink of a ballpoint pen with a 0.7 mm tip (MP Colours, Madrid Paper Import, S.L.). This pen was used to write on standard printer paper (see fig. 6).

### Example 6

### Manufacturing SU-8 photoresist chips

To produce photoresist chips, the starting material was a silicon wafer substrate 100 mm in diameter and 500 µm thick.

Step 1: Next, a 50 µm-thick PVOH "sacrificial layer" was applied on top of the silicon substrate, said layer covering the entire surface. To that end, a 10% solution of PVOH in deionised water was applied and left to dry at 100°C for 5 minutes. The 10% solution of PVOH in deionised water is obtained by dissolving 10% PVOH in deionised water by percentage by mass. Figure 1 (step 1) shows the application of a sacrificial layer (b) onto a substrate (a).

Step 1a: Optionally, according to another example, step 1a of functionalising the sacrificial layer can be performed before step 2. The sacrificial layer is exposed to oxygen plasma at 500 W for 30 seconds, after which a 2% ethanolic solution of the fluorophore sulforhodamine 101 acid chloride "Texas Red", functionalised with a molecule from the amino group, is deposited. This solution is deposited using a micropipette. It is then left to react for 30 minutes and dried with nitrogen. This process is illustrated in Figure 1, step 1a, fluorophore deposition (d).

Step 2: Next, a 2 µm-thick "structural layer" of the SU-8 photoresist was applied on top of the surface of the sacrificial layer. The photoresist is in liquid phase and is deposited onto the substrate, with the sacrificial layer being coated by centrifugation at 3000 rpm. Next, the substrate is dried at 90°C for 5 minutes using a heating plate, as can be seen in Figure 1, step 2, photoresist deposition (c).

Step 3: Next, using photolithography, the shape and dimensions of the resulting chip were determined. To do this, the device is exposed to UV light through the ad hoc photomask that has been mounted on an aligner at a dose of 445 mJ/cm². Subsequently, second drying at 90°C for 5 minutes is performed, and the final development for 1 minute removes all the uncured photoresist, leaving the chip structured.

Figure 8 shows optical microscopy images of photoresist chips fixed on the substrate and the soluble sacrificial layer, before the soluble sacrificial layer dissolves and the photoresist chips are released.

Step 3a: Functionalising the structural layer. A portion of the wafer with chips is exposed to oxygen plasma at 500 W for 30 seconds and is then immersed in a 2% ethanolic solution of the heterobifunctional silane 3-glycidoxypropyltrimethoxysilane and left to react for 30 minutes. Subsequently, the portion of the wafer is washed with ethanol and dried at 100°C for 30 minutes. At the same time, a flat polydimethylsiloxane (PDMS) elastomeric stamp is incubated with a 2% ethanolic solution of the fluorophore sulfonated fluorescein "Alexa Fluor 488", functionalised with a molecule from the amino group. After drying the excess fluorophore solution on the stamp, said stamp is placed in contact with the chips on the portion of the wafer that is functionalised with silane. Light pressure is applied to ensure that the entire stamp is in contact with the chips and it is left to react for 2 minutes. The chips are then characterised using fluorescence microscopy. This process is illustrated in Figure 1, step 3a, fluorophore deposition (e).

Lastly, step 4 in Figure 1 represents the step of removing the sacrificial layer by dissolving the soluble sacrificial layer in the case of SU-8 photoresist chips manufactured on water-soluble PVOH. To perform this step, a 30 µl drop of deionised water or any aqueous solution is deposited onto the portion of the wafer containing the chips, and it is left for 10 minutes to allow the PVOH layer to dissolve at a temperature of 21°C. Optionally, if the chips adhere to the substrate, they can be stirred or subjected to ultrasonic waves to detach the chips. The resulting chips are therefore separated from the initial substrate (4.1a). The top surface of the SU-8 chips can be functionalised in accordance with the protocol described in step 3a (chips 4.2a and 4.3a).

The resulting chips were characterised using optical and fluorescence microscopy, resulting in sizes of designs ranging from 3 × 10 × 0.5 µm³ to 85 × 248 × 5 µm³.

Next, the plurality of chips are dispersed in deionised water or an aqueous medium, including at least one chip for every 30 µl of deionised water, using a micropipette to draw up the solution and deposit it in another container, such as an Eppendorf tube.

### Example 7

### Printing SU-8 chips using an inkjet printer

Following example 6 for obtaining the SU-8 chips, said chips were manufactured, approximately 20,000 SU-8 chips were released into 1 ml of printer ink (EPSON), and the ink suspension with chips was injected directly into the printer's ink cartridge. The resulting suspension was applied to the surface of the printing paper (80 g/m²) using an inkjet printer (EPSON 104). The paper was printed as normal. The result of printing the suspension of the present example on paper using the EPSON 104 printer, as described above, can be seen in Figure 8 showing optical microscopy.

### Example 8

### Ink + SU-8 polymer chips written with a ballpoint pen

The SU-8 chips were manufactured following example 6 and resuspended in the ink of a ballpoint pen with a 0.7 mm tip (MP Colours, Madrid Paper Import, S.L.). This pen was used to write on standard printer paper (see Fig. 9).

### Example 9

### Ink + SU-8 polymer chips, SU-8 polymer chips functionalised and painted with a brush

The SU-8 chips were manufactured following example 6 and functionalised with quantum dots on their surface. Next, they were re-suspended in a watercolour paint. The functionalised chips were deposited onto standard printer paper using a brush (see Fig. 10). In the same manner, a water suspension with larger SU-8 chips (248×85 µm²) was used, and said chips were deposited onto printing paper using a brush (Fig. 11).

## Claims

1. A suspension **characterised in that** it comprises:
o a solid phase comprising
• chips selected from semiconductor materials, insulating or semiconductor oxides or nitrides, metals, magnetic materials, a polymer, a photoresist, or any of the combinations thereof; wherein the semiconductor materials are selected from silicon (Si), amorphous silicon, monocrystalline silicon, polysilicon, germanium (Ge), gallium arsenide (GaAs); wherein the insulating or semiconductor oxides or nitrides are selected from silicon oxide, aluminium oxide, aluminium nitride or silicon nitride; wherein the metals are selected from aluminium, gold, platinum or copper; wherein the magnetic materials are selected from Co, Ni, or NiCo; wherein the polymer is selected from polydimethylsiloxane (PDMS), polymethylphenylsiloxane and polydiphenylsiloxane; and wherein the photoresist is selected from SU-8, SU-8 2000, SU-8 3000, SU-8 GLM2060, SU-8 GLM3060, SU-8 GMC10xx, SU-8 GMJB10XX, SU-8 GM10XX; or any of the combinations thereof;
where the chips range in size from 1 to 250 µm along their X-axis, 1 to 250 µm along their Y-axis, and 10 nm to 50 µm along their Z-axis, said size being determined by optical, confocal, atomic or scanning electron microscopy measurements, or by focused ion beam measurements, profilometers or ellipsometers, and
optionally at least one planar surface of said chips is functionalised by at least one compound selected from molecules, biomolecules, nanoparticles, or any of the combinations thereof;
o a continuous liquid or semi-liquid phase as a medium for suspending the chips, said medium selected from inks, paints or varnishes;
and wherein the percentage by weight of the solid phase is between 0.000001 % and 60% of the total weight of the suspension.

2. The suspension according to claim 1, wherein the chips are made of photoresist and the shape and size of the chips have been determined by means of photolithography, having been predefined by a photomask designed ad hoc.

3. The suspension according to claim 1, wherein the chips are made of silicon and the shape and size of the chips have been determined by means of an etching process that structures the chips, having been predefined by a photomask designed ad hoc.

4. The suspension according to any of claims 1 to 3, wherein the chip is shaped as a cantilever, bridge, lever, and any of the combinations thereof; and/or with a flat geometric shape, preferably selected from circles, disks, crowns, triangles, squares, rectangles, pentagons, hexagons, heptagons, dodecagons, parallelepipeds and irregular flat shapes.

5. The suspension according to claim 4, wherein the chip has a cantilevered shape or has a plurality of cantilevers.

6. The suspension according to any of claims 1 to 5, wherein the chip is disc-shaped and the size of the disc-shaped chips range from 3 µm in diameter × 0.5 µm up to 248 µm in diameter × 5 µm in thickness.

7. The suspension according to any of claims 1 to 6, wherein the continuous liquid or semi-liquid phase of the suspension is an ink selected from inks for ballpoint pens, markers, fountain pens, polymer stamps or printers.

8. A method for obtaining the suspension according to any of claims 1, 2, 4 to 7, **characterised in that** the chips are made of photoresist and it comprises the following sequential steps:
a) providing a substrate, the substrate is preferably a silicon or glass, polymer or metal substrate;
b) coating the substrate of step (a), totally or partially, with a layer of sacrificial material; the sacrificial material is preferably selected from water-soluble polymers, more preferably selected from PVOH, PEG, PAA, PAM, HEC, PVP, PEO or sodium alginate;
c) depositing, onto the sacrificial layer of step (b), the structural layer of a photoresist selected from SU-8, SU-8 2000, SU-8 3000, SU-8 GLM2060, SU-8 GLM3060, SU-8 GMC10xx, SU-8 GMJB10XX, SU-8 GM10XX, or any of the combinations thereof;
d) defining the size and shape of the structural layer using photolithography; the size and shape of the structural layer is preferably determined by using a mask designed ad hoc, to design the shape and size of the chip;
e) optionally applying to the layer obtained in step (d) a top layer comprising at least one compound, the compound is preferably selected from fluorophores, anti-caking compounds, anti-adherent compounds, biomolecules, quantum dots, or any of the combinations thereof;
f) releasing the chips obtained in step (d) or (e) from the substrate by dissolving them in water or an aqueous solution, for a period of time between 5 and 60 minutes, at a temperature of between 5 and 80°C; and
g) dispersing the chips obtained in step (f) in a liquid or semi-liquid phase selected from inks, paints or varnishes, wherein the percentage by weight of the chips is between 0.000001% and 60% of the total weight of the suspension.

9. The method according to claim 8, wherein, after step (b) and before step (c), a layer is applied to at least one part of the surface of the layer of sacrificial material of at least one compound, the compound is preferably selected from fluorophores, anti-caking compounds, anti-adherent compounds, biomolecules, quantum dots or any of the combinations thereof.

10. A method for obtaining the suspension according to any of claims 1, 3 to 7, **characterised in that** the chips are made of semiconductor materials or insulating or semiconductor oxides or nitrides, or metals, or magnetic materials, or polymers, or combinations thereof, and comprises the following sequential steps:
i. providing a silicon substrate;
ii. thermally oxidising the surface of the silicon substrate of step (i);
or depositing silicon oxide onto the substrate of step (i) until a sacrificial layer of silicon oxide with a thickness of 0.1 to 1 µm is obtained;
or depositing a sacrificial layer of aluminium onto the substrate of step (i) until a sacrificial layer of Al with a thickness of 0.1 to 1 µm is obtained
iii. depositing, onto the sacrificial layer obtained in step (ii), a structural layer of amorphous silicon, monocrystalline silicon, polysilicon, germanium, gallium arsenide, silicon oxide, silicon nitride, aluminium, gold, platinum, copper, Co, Ni, NiCo, PDMS, polymethylphenylsiloxane and polydiphenylsiloxane or combinations thereof;
iv. defining the size and shape of the structural layer by partially removing the structural layer by means of an etching process; the size and shape of the structural layer is preferably determined by using a mask designed ad hoc, to design the shape and size of the chips;
v. optionally applying a top chemical functionalisation layer to the structural layer obtained in (iii) using at least one chemical compound, preferably selected from compounds of molecules, biomolecules, or nanoparticles, or the combinations thereof; and optionally applying one or more structural layers of silicon, insulating or semiconductor oxides or nitrides, metal, magnetic materials, photoresists, or any of the combinations thereof; and
vi. releasing the chips obtained in step (iv) or (v) from the substrate, by etching with acid vapours, preferably hydrofluoric acid vapours, the sacrificial layer of silicon oxide incorporated or formed in step (ii), which served as an interface between the substrate and the chip to be manufactured, until the sacrificial layer was completely removed; or by etching with a 50% KOH solution the sacrificial layer of Al incorporated in step (ii), which served as an interface between the substrate and the chip to be manufactured, until the sacrificial layer was completely removed and
vii. dispersing the chips obtained in step (vi) in a liquid or semi-liquid phase selected from inks, paints or varnishes, wherein the percentage by weight of the solid phase is between 0.000001% and 60% of the total weight of the suspension.

11. The method according to claim 10, wherein, after step (ii) and before step (iii), a layer of a compound is applied partially or completely to the surface of the sacrificial layer, the compound is preferably selected from fluorophores, anti-caking compounds, anti-adherent compounds, biomolecules, quantum dots, or any of the combinations thereof.

12. Use of the suspension described according to any of claims 1 to 7, to transfer the chips contained in the suspension to spatially and geometrically complex surfaces.

13. A method for transferring the chips contained in the suspension according to any of claims 1 to 7 to a surface, **characterised in that** it comprises a step of:
▪ depositing the suspension described according to any of claims 1 to 7 onto the surface by means of writing, painting or printing means,
wherein the writing, painting or printing means comprise channels for distributing the suspension onto the surface, and wherein the chips of the suspension are smaller than the channels of the writing, painting or printing device.

14. Use of the suspension according to any of claims 1 to 7 for determining the dimensions of the channels of a writing, painting or printing device, the suspension preferably comprises disc-shaped chips.

15. A method for determining the dimensions of the channels of a writing, painting or printing device, **characterised in that** it comprises a step of passing the suspension according to any of claims 1 to 7 through a channel of a writing, painting or printing device, wherein the chips contained in the suspension are larger than the channel of the device and wherein said chips are unable to pass through the channel and they break.

16. A device capable of using or dispensing a suspension on spatially and geometrically complex surfaces via an outlet channel, wherein said device comprises the suspension according to any of claims 1 to 7 and wherein the outlet channel has a diameter greater than the largest dimension of the chips of the suspension.

17. The device according to claim 16, wherein said device is selected from a writing, painting or printing device, preferably from an inkjet printer, a ballpoint pen, a fountain pen, a polymer stamp, or a brush.
